# EUROPEAN PATENT APPLICATION

(11) **EP 1 359 727 A2**
(43) Date of publication of application: **05.11.2003**
(21) Application number: 03251022.4
(22) Date of filing: 20.02.2003
(51) Int. Cl.: H04L 29/06

(54) **Internet protocol system using hardware protocol and relating parallel data processing method**

(30) Priority: 08.04.2002 KR 2002019052
(71) Applicant: WIZNET CORP., Kangnam-Gu, Seoul (KR)
(72) Inventor: Lee, Jung-Tae, Haewundae-Gu., Busan Citiy (KR); Kim, Ku-Hwan, Bundang-Gu., Seongnam City., Kyonggi-Do (KR); Choi, Gyu-Sung, Seoul (KR); Go, Yun-Young, Kwanak-Gu., Seoul (KR)
(74) Representative: Findlay, Alice Rosemary

(57) **Abstract**

An apparatus for Internet communication comprises an application protocol (10), a transmission control protocol/Internet protocol (TCP/IP) protocol (20) and a physical protocol (30). Data of the TCP/IP protocol stack are processed in parallel in hardware. In one embodiment, the hardware processing logic for each of transmission control protocol (TCP), user datagram protocol (UDP), Internet control message protocol (ICMP), Internet group management protocol (IGMP), address resolution protocol (ARP) and reverse address resolution protocol (RARP) includes its own memory controller, a data buffer (212), a header buffer (214) and control logic (218). Processing of data in parallel includes storing first unit processing data in a temporary buffer, initializing a checksum buffer to be used in a checksum calculation of the data. Processing steps are performed repeatedly to process the Internet protocol data, and, at each processing step, multiple operations are carried out simultaneously by a plurality of parallel processing units within a single unit time.

## Description

### BACKGROUND OF THE INVENTION

### Technical Field

This invention relates to Internet communications in general and, more particularly, to a communications protocol system implementing transmission control protocol/Internet protocol (TCP/IP) stack in hardware, and a method for processing data in parallel by using the protocol system.

### Related Art

Transmission control protocol/Internet protocol (TCP/IP) is a set of protocols and programs used to provide computers with Internet communications and to route traffic among different types of computers. Computer systems that use TCP/IP speak a common language, regardless of hardware or operating system differences. Typically, TCP/IP protocols work together across many levels of the open system interconnection (OSI) reference model in order to perform required tasks. The different tasks required by a network are accomplished by a number of different sets of protocols (also called protocol stacks). The TCP/IP protocol stack, for example, consists of many protocols and handles Internet communications. Alternatively, a protocol stack called AppleTalk manages communications among Macintoshes. On the other hand, Windows computers use their unique protocol stack to manage communications among Windows computers on the network. Each client, server, and many peripherals on the network include software that implements (ensures they have capabilities for) one or more of these protocol stacks. For example, on most modern networks, Macintosh computers include software for the TCP/IP and AppleTalk protocol stacks, and Windows computers include software for the TCP/IP and Windows protocol stacks. A single client, server, or peripheral may include software to implement many protocol stacks simultaneously.

Protocol blocks in the transmission control protocol/Intemet protocol (TCP/IP) stack include TCP, user datagram protocol (UDP; connectionless transport layer protocol in the TCP/IP protocol stack), Internet control message protocol (ICMP; network layer Internet protocol that reports errors and provides other information relevant to Internet protocol (IP) packet processing), IP, Internet group management protocol (IGMP; used by IP hosts to report their multicast group memberships to an adjacent multicast router), address resolution protocol (ARP; Internet protocol used to map an IP address to a media access control (MAC) address), reverse address resolution protocol (RARP; providing a method for finding IP addresses based on MAC addresses), and Ethernet data link control (DLC). Conventionally, these protocol blocks are configured in software to be suitable in a personal computer (PC) environment or processed internally by an operating system (OS).

The conventional technology implements in software the application protocol that includes packet Internet groper (Ping), Telnet, file transfer protocol (FTP), simple mail transfer protocol (SMTP), domain name system (DNS), trivial file transfer protocol (TFTP; simplified version of FTP usually without the use of client authentication), simple network management protocol (SNMP; providing a means to monitor and control network devices, and to manage configurations, statistics collection, performance, and security), broader gateway protocol (BGP; interdomain routing protocol that replaces exterior gateway protocol (EGP)), and dynamic host configuration protocol (DHCP; providing a mechanism for allocating IP addresses dynamically so that addresses can be reused when hosts no longer need them). Only the physical protocol is implemented by hardware including a media access control (MAC) controller and physical circuits.

The conventional software implementation of transmission control protocol/Intemet protocol (TCP/IP) protocol stack has the drawbacks of increased cost of the operating system (OS), a bottleneck in multimedia transmission, degraded communication performance by the software, and an interface bottleneck between the software and hardware. Therefore, advanced new techniques are required for implementing the TCP/IP stacks for information appliances, factory automation equipment, mobile communication devices (*e.g*., PDA, IMT-2000 terminal) and other PC-less devices (*e.g.*, web camera, Internet medical equipment and wireless gauge).

### SUMMARY OF THE INVENTION

The purpose of this invention is to provide hardware logic that can implement a transmission control protocol/Internet protocol (TCP/IP) stack conventionally processed by a software or under an operating system (OS).

Another purpose of this invention is to process data in parallel by using hardware logic that can implement the TCP/IP stack, and to provide communication protocols which can offer superior performance and minimum delay in multimedia application, which are more cost effective, and which are easier to use and to integrate into system-on-chip (SoC) than the conventional software implementation.

Another purpose of this invention is to provide configuration and data processing methods of hardware logic modules, upper layer interface logics and lower layer interface logics for each block of transmission control protocol (TCP), user datagram protocol (UDP), Internet protocol (IP), Internet control message protocol (ICMP), Internet group management protocol (IGMP), address resolution protocol (ARP) and reverse address resolution protocol (RARP) that belong to a transmission control protocol/Intemet protocol (TCP/IP) protocol stack.

Still another purpose of this invention is to extend the hardware implementation technology to application protocols and lower layer protocols, as well as the TCP/IP protocol stack, so that the application protocols and lower layer protocols can be integrated into the hardware logic.

According to one aspect of the present invention, an apparatus for Internet communication comprises an application protocol, a TCI/IP protocol and a physical protocol, and data of the TCP/IP protocol stack is processed in parallel in hardware. In one embodiment, each of the transmission control protocol (TCP), user datagram protocol (UDP), Internet control message protocol (ICMP), Internet group management protocol (IGMP), address resolution protocol (ARP) and reverse address resolution protocol (RARP) hardware processing logic included in the apparatus includes its own memory controller, a data buffer, a header buffer and a control logic.

According to another aspect of the present invention, a method for processing data in parallel includes a step, carried out during a first unit time, for storing first unit processing data into a temporary buffer, initializing a checksum buffer to be used in a checksum calculation of the data, and storing the first unit processing data into a first buffer. The method further comprises: a second processing step performed during a second unit time and including sub-steps of summing second unit processing data and the value stored in the temporary buffer, and storing the second unit processing data into a second buffer; a third processing step carried out during a third unit time and including sub-steps of storing third unit processing data into the temporary buffer, storing a value summed in the second unit time into the checksum buffer, and storing the third unit processing data into a third buffer; and fourth processing step performed during a fourth unit time and including sub-steps of summing fourth unit processing data and the stored value in the temporary buffer and storing the fourth unit processing data into a fourth buffer. Here, the processing steps are performed repeatedly for the processing of the Internet protocol data, and, at each processing step, multiple operations are simultaneously carried out by a plurality of parallel processing units within a single unit time.

### Terminology

(1) transmission control protocol/Internet protocol (TCP/IP) stack means a protocol group including transmission control protocol (TCP), user datagram protocol (UDP), Internet protocol (IP), address resolution protocol (ARP), reverse address resolution protocol (RARP), Internet group management protocol (TGMP), and the like.
(2) Internet data is a generic term indicating a header and data information of transmission control protocol (TCP), user datagram protocol (UDP), Internet protocol ([P), address resolution protocol (ARP), reverse address resolution protocol (RARP), and Internet group management protocol (IGMP).
(3) Packet is a transmission unit that includes a header and data information of the Internet protocol.
(4) Unit processing data is a minimum unit (1-byte, 2-byte, 4-byte or greater than 4-byte) for processing a header and data in each of the protocol.
(5) Unit time represents a synchronous signal required for operating a hardware logic, and is a set of one or more clocks necessary in processing data of 1 byte.
(6) Lower layer protocol is a generic name for all of the communication protocol that is connectable to lower layer or to Internet protocol (IP) protocol layer such as used in 10/100 Ethernet, wireless local area network (LAN), Bluetooth, power-line, home phone-line networking alliance (HomePNA), home radio frequency (HomeRF) and serial communication.
(7) Application protocol is a generic name of a protocol including HTTP, simple mail transfer protocol (SMTP), POP3, simple network management protocol (SNMP), Telnet, file transfer protocol (FTP) and packet Internet groper (Ping) that provides services to users at a higher level than transmission control protocol (TCP), user datagram protocol (UDP), Internet protocol (IP), address resolution protocol (ARP), Internet control message protocol (ICMP), and Internet group management protocol (IGMP).

These and other features and advantages will be more clearly understood from the following detailed description taken in conjunction with the accompanying drawings. It is important to point out that the illustrations may not necessarily be drawn to scale, and that there may be other embodiments of this invention which are not specifically illustrated.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference numerals indicate the same or similar components, and wherein:
Fig. 1 shows the configuration of a communication protocol of Internet using transmission control protocol/Internet protocol (TCP/IP).
Fig. 2 illustrates a conceptual configuration of the present invention.
Fig. 3 is a block diagram of hardware protocol processing logic according to the present invention.
Fig. 4 illustrates a segment format of a transmission control protocol (TCP) header used in Internet communication.
Fig. 5 is a block diagram of TCP hardware processing logic for implementing the TCP header in hardware according to the present invention.
Fig. 6 is a timing diagram illustrating the process of receiving and processing, in parallel, the TCP header data.
Fig. 7 is a block diagram illustrating a transmission phase of the hardware TCP logic block for computation of the TCP checksum.
Fig. 8 shows the internal configurations of transmission control protocol (TCP), user datagram protocol (UDP), Internet control message protocol (ICMP), Internet group management protocol (IGMP), address resolution protocol (ARP) and reverse address resolution protocol (RARP) logic blocks for parallel data processing.
Fig. 9 shows the internal configuration of an Internet protocol (IP) protocol logic block for parallel data processing.
Fig. 10 illustrates the configuration of buffers of protocol blocks for parallel data processing.
Fig. 11 is a block diagram of lower layer interface logic according to an embodiment of the present invention.
Figs. 12A to 12E show internal configurations of lower layer protocol logic according to an embodiment of the present invention.
Fig. 13 is a block diagram of upper layer interface logic according to an embodiment of the present invention.
Fig. 14 is a block diagram of hardware protocol processing logic that includes parts of or all of the upper layer application protocol according to an embodiment of the present invention.
Figs. 15A and 15B are block diagrams of modified embodiments of the present invention.

### DETAILED DESCRIPTION

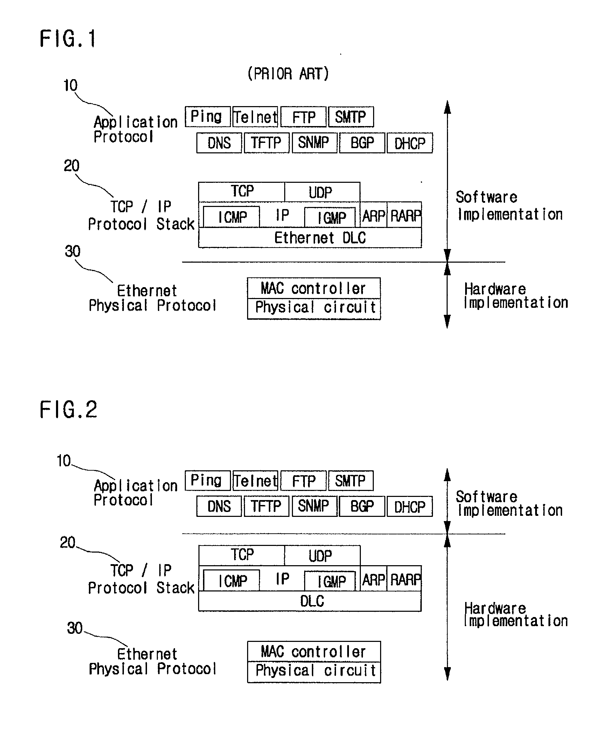

Referring to Fig. 1, protocol blocks in the transmission control protocol/Internet protocol (TCP/IP) stack 20 include transmission control protocol (TCP), user datagram protocol (UDP; connectionless transport layer protocol in the TCP/IP protocol stack), internet control message protocol (ICMP; network layer Internet protocol that reports errors and provides other information relevant to Internet protocol (IP) packet processing), IP, Internet group management protocol (IGMP; used by IP hosts to report their multicast group memberships to an adjacent multicast router), address resolution protocol (ARP; Internet protocol used to map an IP address to a media access control (MAC) address), reverse address resolution protocol (RARP; providing a method for finding IP addresses based on MAC addresses), and Ethernet data link control (DLC). Conventionally, these protocol blocks are configured in software to be suitable in a PC environment or processed internally by an operating system (OS).

In Fig. 1, the conventional technology implements in software the application protocol 10 that includes packet Internet Groper (Ping), Telnet, file transfer protocol (FTP), simple mail transfer protocol (SMTP), domain name system (DNS), trivial file transfer protocol (TFTP; simplified version of FTP usually without the use of client authentication), simple network management protocol (SNMP; providing a means to monitor and control network devices, and to manage configurations, statistics collection, performance, and security), broader gateway protocol (BGP; interdomain routing protocol that replaces exterior gateway protocol (EGP)), and dynamic host configuration protocol (DHCP; providing a mechanism for allocating IP addresses dynamically so that addresses can be reused when hosts no longer need them). Only the physical protocol 30 is implemented by hardware including a media access control (MAC) controller and physical circuits.

The conventional software implementation of transmission control protocol/Internet protocol (TCP/IP) protocol stack has the drawbacks of increased cost of the OS, a bottleneck in multimedia transmission, degraded communication performance by the software, and an interface bottleneck between the software and hardware. Therefore, advanced new techniques are required for implementing the TCP/IP stacks for information appliances, factory automation equipment, mobile communication devices *(e.g.,* PDA, IMT-2000 terminal) and other personal computer (PC)-less devices *(e.g.,* web camera, Internet medical equipment and wireless gauge).

Conceptual configuration of the present invention is shown in Fig. 2. Whereas the TCP/IP protocol stack 20 of Fig. 1 is implemented by software, the TCP/IP protocol stack 20' of Fig. 2 is configured and implemented by hardware according to the present invention.

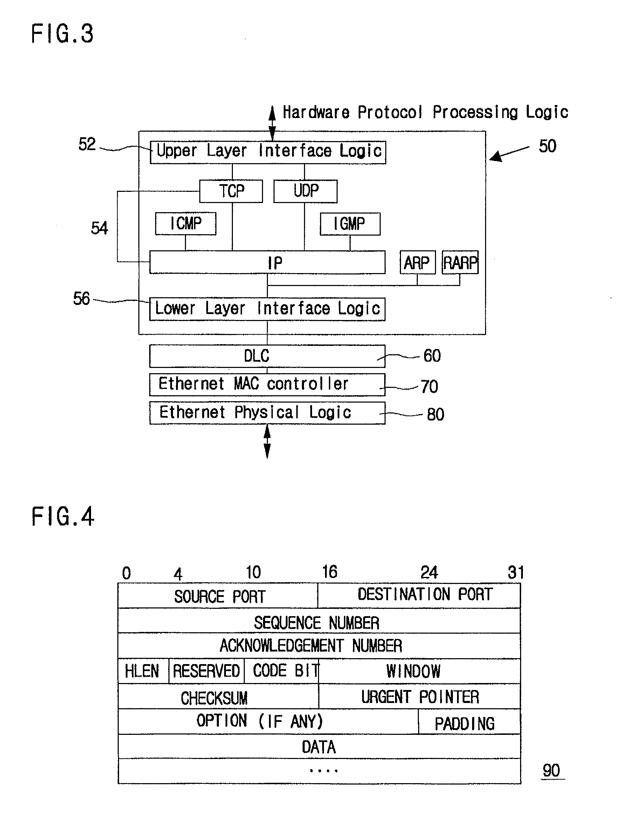

Fig. 3 is a block circuit diagram of hardware protocol processing logic according to the present invention. Referring to Fig. 3, hardware protocol processing logic 50 for the TCP/IP protocol stack 20' includes: (a) upper layer interface logic 52; (b) TCP, UDP, ICMP, IGMP, IP, ARP and RARP hardware protocol processing logics (HPPL) 54; and (c) lower layer interface logic 56. The upper layer interface logic 52 controls data flowing to and from an upper application layer (not shown), and the lower layer interface logic 56 is connected to data link control (DLC) 60, Ethernet media access control (MAC) controller 70 and Ethernet physical logic 80.

In the description, the term 'hardware logic implementation' represents that every function is configured by circuitry which can be integrated into an application specific standard product (ASSP) or application specific integrated circuit (ASIC) chips, and all the data processing is performed in parallel in a unit time. Meanwhile, conventional software implementation processes data sequentially or in serial by byte using an operating system (OS) operable in general microcomputer units (MCUs).

All of the component blocks of hardware protocol processing logics (HPPL) of Fig. 3 have identical internal structure except for the IP block, and thus the hardware processing is performed in the same manner with minor differences in detail depending on their own protocol header. Therefore, the description will be provided with reference to hardware transmission control protocol (TCP) processing logic, and the logic of other blocks is explained with focus on their differences from the TCP logic.

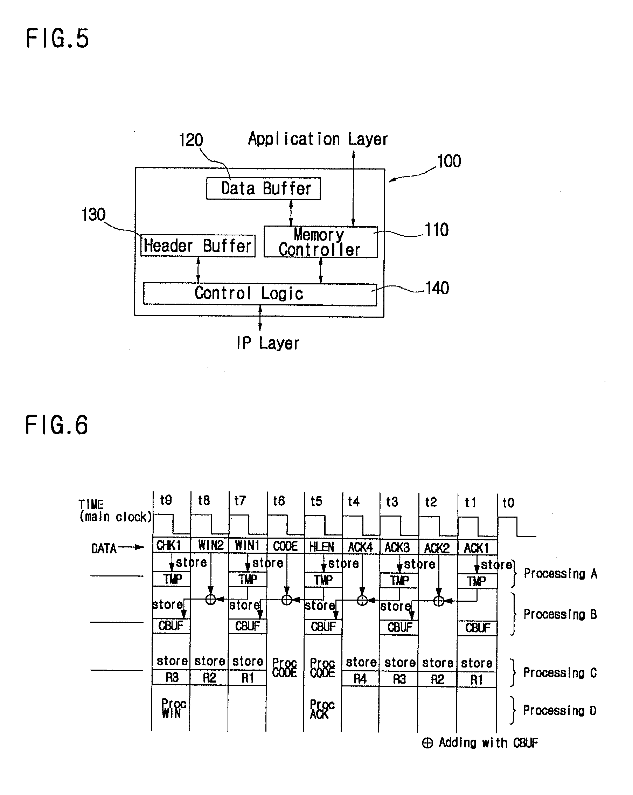

The header 90 of TCP protocol used in the Internet is configured as shown in Fig. 4. The technology for processing, by means of hardware, the header of Fig. 4 is called 'hardware TCP processing logic' and the structure thereof is illustrated in Fig. 5.

Referring to Fig. 4, in the transmission control protocol/Intemet protocol (TCP/IP) protocol header or segment 90, the source and destination port numbers are 16-bit transmission control protocol (TCP) port numbers. The sequence number and the acknowledge number are indications of which byte number has been sent and which byte has been received. The HLEN provides the length of the header, and is necessary because the OPTION and PADDING fields are variable. The 6-bit code field bits are assigned - URG: urgent pointer is valid; ACK: acknowledgment field is valid; PSH: segment requires a push; RST: reset the connection; SYN: synchronize sequence numbers; FIN; sender has reached the end of its byte stream. The window advertisement is done by specifying the remaining buffer sizes in the WINDOW field. The TCP checksum computation uses the same pseudo header scheme as is used for user datagram protocols (UDPs), and this helps ensure that the data has made it to both the correct machine and port. The URGENT POINTER field points to the END of the urgent data. The OPTION field is used to communicate, with the transport peer, such values as MAXIMUM segment size. The PADDING field evens the byte count of the OPTION field.

Referring to Fig. 5, the hardware transmission control protocol (TCP) processing logic 100 operates independently from other protocol layers, processes a header of a TCP packet, and carries out transmission and receiving operations of TCP data. The hardware TCP processing logic 100 may include a memory controller 110, a data buffer 120, a header buffer 130 and control logic 140.

The operation in the data transmission phase begins with storing application data, that enters synchronously with a control signal in an application layer into a data buffer 120 by means of a memory controller 110. At the same time that data are stored, the memory controller 110 computes in advance a checksum of data. When receiving, through the upper layer interface logic 52 of Fig. 3 and from the application layer, a signal saying that the data transmission starts, the TCP control logic 140 generates a TCP header by using the latest information, and calculates a precise checksum by using the data checksum and the header checksum to store them into a header buffer 130. When the header generation is completed, the TCP control logic 140 transfers data to the lower IP layer according to a clock. The unit by which the header and data are transferred may be 64-bit, 32-bit, 16-bit or 8-bit depending on the internal bus used.

The operation of the hardware transmission control protocol (TCP) processing logic 100 in the data receiving phase from the IP layer will be explained.

The TCP control logic 140 receives the TCP header and data from the Internet protocol (IP) protocol layer according to a clock. With respect to the TCP header, the TCP control logic 140 collects the header data according to each unit of processing data of the header, and immediately carries out all of the processing by means of several processors. For instance, the source port and destination port in the TCP header of Fig. 4 are collected by 2-byte unit, and are compared with the source and destination ports of a currently open channel. If there is no open channel, an error message is transmitted. When an open channel exists, the TCP control logic 140 prepares for storing the collected source and destination ports into a data buffer 120 of the open channel. The sequence number field of the transmission control protocol/Internet protocol (TCP/IP) protocol header of Fig. 4 has a unit processing data of 4-byte (*i.e*., 32-bit), and thus is collected by 4-byte unit to be stored into a corresponding data buffer 120 after compared, in hardware, with a sequence to be received. The acknowledgment number is processed by 4-byte unit, and a region in a data buffer 120, which is waiting for an acknowledgment signal from the peer node of already transmitted data and currently stored in a data buffer 120, is released. A necessary processing is performed in a 1-byte unit for HLEN and CODE BIT and in a 2-byte unit for WINDOW, CHECKSUM and URGENT POINTER. The OPTION field is processed in a unit time of the entire length including an associated type field. Because the processing to the TCP/IP protocol header is completed in *e.g*., 1-unit time for 1-byte data, 2-unit time for 2-byte data and 4-unit time for 4-byte data, there is no delay in the processing of the header and data. During the data receiving phase, information necessary for the transmission are stored into the header buffer 130 for subsequent transfer after the processing of the received header so that the transmission is performed without additional computation or calculation step.

In the data receiving phase, the processing of transmission control protocol (TCP) data is based on the unit processing data of 2-byte, and thus a checksum calculation is by 2-byte, while TCP data is stored in the data buffer 130 in a unit of 1-byte. However, the operations of calculation of the checksum and data storing into the data buffer 130 are carried out simultaneously using parallel processing by means of the hardware configurations shown in Fig. 5. For the last received TCP data byte, the result of checksum calculation is compared with the checksum field in the TCP/IP protocol header. When the comparison result is correct (meaning it does not fail), a writing pointer value of the data buffer is increased by the size of the received data; when the comparison result is incorrect or fails, the status of the data buffer is reset or returned to an earlier value, which is before the packet is received, by initializing the writing pointer value.

In order to overcome the drawbacks in the software implementation, the present invention uses, among other things, a parallel processing technology to process all of the circuits. In the parallel processing, a parallel processing algorithm by which all the data in the TCP header are processed immediately after the data are collected according to the corresponding unit processing data. For doing this, a number of tasks are performed simultaneously in a unit time, and operations of 1-byte unit, 2-byte unit and 4-byte unit are performed in parallel with other tasks. To illustrate this, parallel processing from the ACK number field to the first byte of the checksum field of the TCP/IP protocol header 90 in Fig. 4, when receiving a packet, is shown in Fig. 6.

Referring to Fig. 6, it is illustrated that among the received transmission control protocol (TCP) header data, the ACK number, HLEN, CODE, WINDOW, and CHECKSUM fields are processed in parallel according to each of the processing units. In Fig. 6, symbols 't0 to t9' for the main clock represent the unit time orderly numbered as time goes by. Here, t0 precedes time t1. Even if each of the unit times t0 to t9 is shown in Fig. 6 to have a single clock cycle, it may have a number of clocks depending on the main clock used.

In Fig. 6, Processings A and B process in parallel the checksum of the TCP header, while Processings C and D process in real-time the associated unit processing data. The processing of checksum is performed with 2-byte of unit processing data, and hence at unit time t1, Processing A stores received data ACK1 (first byte of Acknowledgment number) into a temporary buffer TMP. At the same time, Processing B resets a checksum result buffer CBUF which will be used in the calculation of the checksum of the TCP header, and Processing C stores ACK1 into a buffer R1 to collect data of four bytes, which is the size of unit processing data of the ACK number. Similarly, at unit time t2, Processing B adds currently received data ACK2 and the value temporarily stored in TMP to make a 16-bit word for the calculation of 16-bit header checksum, and then the 16-bit word is added to the contents in CBUF. In the same unit of time, Processing C stores ACK2 into R2. At unit time t3, received data ACK3 is stored again into the temporary buffer TMP, and at the same time the previously added value in unit time t2 is updated to CBUF, and Processing C stores ACK3 into R3. The operation at t4 is identical to the operation at unit time t2. At unit time t5, HLEN, data received by Processing A for the TCP checksum calculation, is stored into TMP, and at the same time, Processing B updates CBUF with the value calculated at unit time t4, and HLEN, data received by Processing C, is processed immediately without storing since it has unit processing data of 1-byte. At the same time, Processing D performs processing of the ACK number by using a 4-byte ACK value that has been collected at unit times from t1 to t4. Here, a data region in the TCP data buffer, where ACK is received, is released. The parallel processing since unit time t6 is performed, depending on the size of unit processing data, in a manner similar to processing performed at unit times from t0 to t5.

The size of unit processing data may be 1-byte or less, 2-byte or 4-byte for the transmission control protocol (TCP) header, while for the Option field of the TCP header, the maximum size represented in the option segment length field becomes the size of unit processing data. Further, since the processing of checksum data is performed in 16-bit, the unit processing data is 2-byte, while since data storage is based on 8-bit, the unit processing data becomes 1-byte.

In Fig. 6, when the processing of the TCP header is completed, receiving of TCP data is successively carried out. Because the checksum calculation of TCP has to be performed identically for both the TCP header and data, Processings A and B continuously perform the same operations as to the header, and at the same time, Processing C stores received data into the TCP data buffer 120 during the corresponding unit time. At an instant when the TCP packet (segment) receives the last data, the final TCP checksum result is produced. At unit clock 'tn+1' next to 'tn', an instant when the last data is received, CBUF has the result value of the checksum calculation of the whole received TCP packet, including the header and data, and each of the processing result values is compared with the checksum value in the TCP header to determine 'fail' or 'success'. If the result is 'checksum fail', data already stored in the TCP data buffer is discarded at the next clock cycle 'tn+2' and memory pointer values are, at the next clock cycle 'tn+3', reset to values existing before the packet has been received. If the comparison result is 'success', the stored data is preserved, and processing is continued to the subsequently received packet.

The parallel processing explained so far simultaneously performs several operations in a unit time, which leads to elimination of processing delay and a significant improvement in the efficiency of data processing. The number of Processings A, B, C and D may be either extended or reduced depending on the operations to be carried out, and on the protocol logics of transmission control protocol (TCP), user datagram protocol (UDP), Internet protocol (IP) and the like.

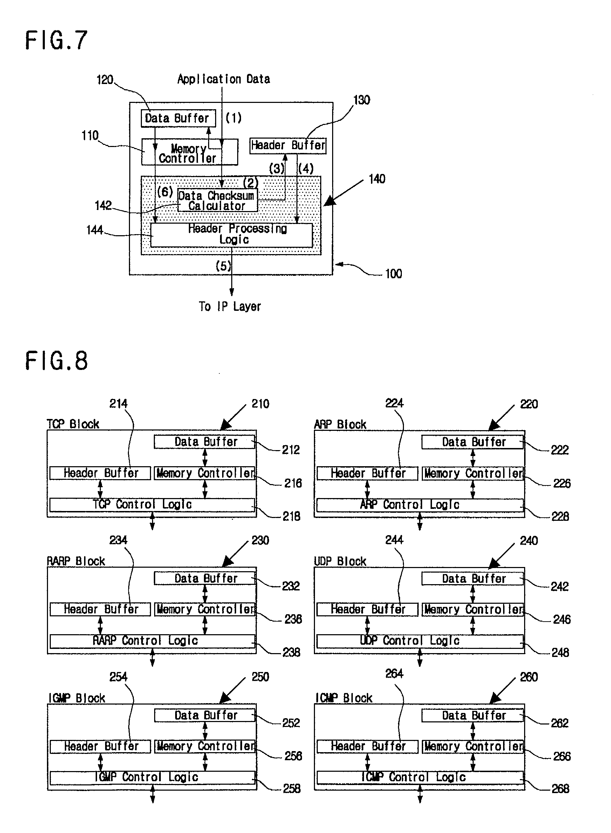

Transmission of the hardware TCP processing logic 50 is performed in a manner opposite to that of the receiving phase. For a detailed explanation of the transmission phase, the configuration of Fig. 5 is more specifically illustrated in Fig. 7. In this embodiment, the TCP control logic 140 may include a data checksum calculator 142 and a header processing logic 144.

Referring to Fig. 7, when the memory controller 110 receives, from the application layer, data to be transmitted, the memory controller 110 stores the received data into the data buffer 120 and at the same time the transmission control protocol (TCP) control logic 140 computes in advance a checksum of data having a predetermined size. Here, two control logics are concerned with the parallel processing. The size of checksum of data depends on the kind of application and the maximum packet size, and ranges from a minimum of 1 byte to a maximum of a maximum segment size (MSS) value of the communication network.

In the transmission of the structure shown in Fig. 7, in contrast to the receiving phase, the hardware transmission control protocol (TCP) processing logic block stores, into the TCP data buffer in advance, data to be transmitted, and the existing information in the TCP header buffer is transmitted prior to the data transfer. Then from the next unit clock, data in the data buffer is continuously transmitted to lower layers.

In technologies using software for sending the TCP segments in the transmission phase, data to be transmitted has to be read from memory to compute a checksum, and thereafter TCP header is transferred. Subsequently, data has to be read from the memory for sending the TCP data. This results in duplicate reading of the overall data. However, in the present invention, the checksum of data is computed in advance (as noted by '(2)' in Fig. 7) during a time when data are received from the application and stored into the data buffer 120 (1), and then the computed checksum is stored into the checksum field of the header region of TCP (3). Thereafter, when the TCP control logic 140 receives a packet transmission command or instruction from the application layer via the upper layer interface logic, data in the header buffer is read and immediately transferred (5), and the information of the data buffer 120 is successively delivered from the memory controller 110 and transmitted (6). The checksum of data computed beforehand makes possible the direct transmission of data without performing an additional computation operation for the transfer of TCP packet, which leads to the maximum performance of the lower layers and improvement, by a factor of up to two, in performance of the upper layer when data are sufficiently supplied.

Detailed operations for parallel processing in the transmission phase are explained. In Fig. 7, the transmission control protocol (TCP) control logic 140 uses, for the transmission, the checksum value calculated in advance, and thus Processings A and B for the checksum calculation in Fig. 6 can be omitted in the transmission operation of the hardware TCP processing logic 140. Further, instead of the Processings C and D for the header analysis, the header values that have been stored in the header buffer 130 of Fig. 7 are read and transmitted. Accordingly, for the parallel processing within the TCP control logic of Fig. 7, a single processing to transfer the header and data information is sufficient Of course, an additional parallel operation in which the memory controller 110 reads out data and hands it over, the TCP processing logic is required for the data transmission. The TCP processing logic has to perform, in advance of the transmission, processing by which a TCP header is generated for producing the header information during a remaining time period prior to the data transmission. The term 'remaining time period' represents either a time period when data is received from the application and stored into the memory or a time period when data in the header is transferred. The information in the header buffer 130 can be modified because access to the header buffer 130 does not occur during the remaining time period.

The parallel processing technology explained with reference to Fig. 6 is identically applied to the user datagram protocol (UDP), Internet protocol (IP), address resolution protocol (ARP), and reverse address resolution protocol (RARP), Internet control message protocol (ICMP) and Internet group management protocol (IGMP) processing logics shown in Fig. 3, as well as the hardware TCP processing logic, and therefore received or transmitted data can be delivered to the Internet or the application layer without processing delay, memory access delay and calculation delay, such as is required for the checksum.

Further, the pre-calculation of the header information and checksum, as explained above with reference to Fig. 6, are similarly applied to the transmission of the header and data of UDP, IP, ARP, RARP, ICMP and IGMP and other protocol processings that are required to be performed concurrently.

In order to support the parallel processing, detailed configurations of each of the logic blocks, except for the IP block of Fig. 3, are illustrated in Fig. 8.

Referring to Fig. 8, each of transmission control protocol (TCP) block 210, address resolution protocol (ARP) block 220, reverse address resolution protocol (RARP) block 230, user datagram protocol (UDP) block 240, Internet group management protocol (IGMP) block 250 and Internet control message protocol (ICMP) block 260 has its own data buffer 212, 222, 232, 242, 252 and 262, header buffer 214, 224, 234, 244, 254 and 264, memory controller 216, 226, 236, 246, 256, and 266 and control logic 218, 228, 238, 248, 258 and 268, respectively.

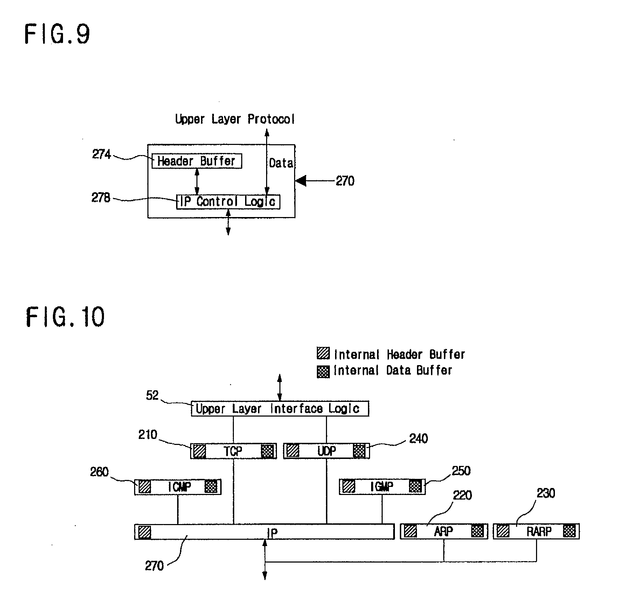

Fig. 9 shows the configuration of Internet protocol (DP) protocol logic block for parallel data processing according to an embodiment of the present invention.

Referring to Fig. 9, the IP block 270 may include a header buffer 274 and an IP control logic 278. It should be noted that there is no data buffer in the IP block 270. The IP control logic 278 in the transmission phase transfers, prior to receiving data from the upper layer, IP header information during an assigned time period when the header is transferred through control information. Thus, data transferred from the upper layer right after the header transmission is completed can be transmitted without delay, which results in no necessity of a data buffer within the IP block. Further, the received header information can immediately perform dedicated functions or be used to update the header buffer 274 of Fig. 8, and the received data are stored commonly in the data buffer 120 of the upper protocol logics, such as transmission control protocol (TCP), user datagram protocol (UDP), Internet control message protocol (ICMP) and Internet group management protocol (IGMP). In the case of TCP and UDP, a fragmentation of IP may occur during packet transmission/receiving. When this kind of error occurs or the IP checksum is determined to be false, control information is transferred to TCP or UDP to delete data in data buffer 120 of the upper protocol logic which has stored data in common and to reset each of the pointer values to previous values. These operations of the IP block are applied to the upper protocol logics such as UDP, ICMP and IGMP as well as TCP. Therefore, a memory of the IP block can be omitted by using the memory of the upper layers in common, which results in an improvement in the practical applicability of memory, and data can be transferred to the final data buffer 120 without delay in storing data for each layer. The structure of buffer is shown in Fig. 10.

Referring to Fig. 10, the protocol blocks 210, 220, 230, 240, 250 and 260, except for the Internet protocol (IP) block 270, have distributed internal header buffer and data buffer for parallel processing, while the IP block 270 has only the header buffer. While the IP block without its own data buffer is significantly efficient for minimizing the delay in multimedia applications or in applications requiring high-speedy processing, a data buffer can be included in the IP block 270 for low speed applications or other applications where the delay is not critical since the common memory scheme may make complex the memory control logic in the upper protocol logics.

Now, the lower protocol interface logics according to the present invention are explained.

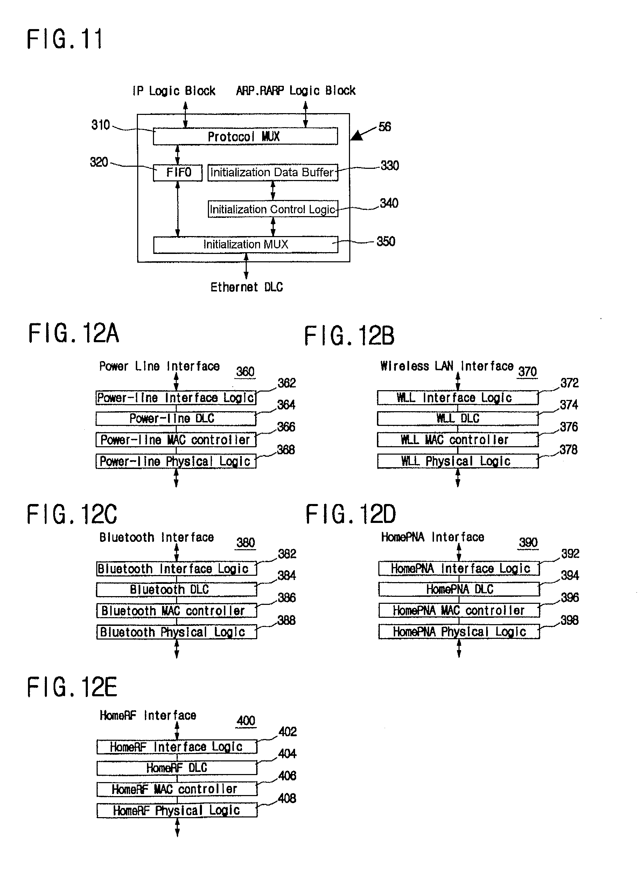

Methods to connect the Internet protocol (IP) logic block to lower layers are various. For a connection without delay and without intervention of software, which may cause a bottleneck phenomenon, logic (for instance '56' of Fig. 3) to control the interface between the IP logic block and the lower layer protocol is necessary. As shown in Fig. 3, the interface logic 56 directly controls Ethernet data link control (DLC) and Ethernet media access control (MAC), and performs resetting of Ethernet MAC and control functions that have been done by drive programs in the conventional software implementation. Accordingly, in the present invention, the control of Ethernet devices and data communication can be done by hardware, without any software operation. Fig. 11 shows the configuration of the lower layer interface logic.

Referring to Fig. 11, the lower layer interface logic 56 may include a protocol multiplexer (MUX) 310, a FIFO 320, an initialization data buffer 330, an initialization control buffer 340, and an initialization MUX 350. Data for initial operation of the lower layer protocol is stored in the initialization data buffer 330. Either when the initialization operation starts or when an initialization instruction is transferred from the application, the initialization control logic 340 reads the initialization information from the initialization data buffer 330 and the lower layer Ethernet DLC is initialized. The initialization MUX 350 delivers the initialization information to the lower layer according to the control information of the initialization control logic 340 during the initialization period. Once the initialization is completed, the initialization MUX 350 delivers data from FIFO 320 to the lower layer. The information in the initialization data buffer 330 can be chosen to be fixed for dedication to a specific lower layer, or to be varying for connection to several lower layers, so that the initialization information can be stored directly into the initialization data buffer 330 from the application through the upper layer interface logic when the lower layer is formed.

In general, the lower layer protocols have their own synchronization clock for the interface. In the hardware connection, adjusting to the synchronization clock is the most important. In Fig. 11, the FIFO 320 plays the role of a data buffer to synchronize the clock between the lower layer protocol Ethernet and upper Internet protocol (IP), address resolution protocol (ARP) or reverse address resolution protocol (RARP).

Referring to Fig. 11, a protocol multiplexer (MUX) 310 identifies packets of IP logic or ARP and RARP logic in the receiving phase, while selecting and transferring data of IP logic or ARP and RARP logic in the transmission phase.

The lower layer interface logic as explained can be applied to other protocols, such as wireless LAN, power-line communication, Bluetooth, home phone-line networking alliance (HomePNA), home radio frequency (HomeRF) and serial communication as well as the Ethernet, as shown in Figs. 12A to 12E. In this case, each lower layer interface logic can be referred to as power-line interface logic 362, WLL interface logic 372, Bluetooth interface logic 382, HomePNA interface logic 392 and HomeRF interface logic 402, and the configurations and operations thereof are similar to what is described above with reference to Fig. 11.

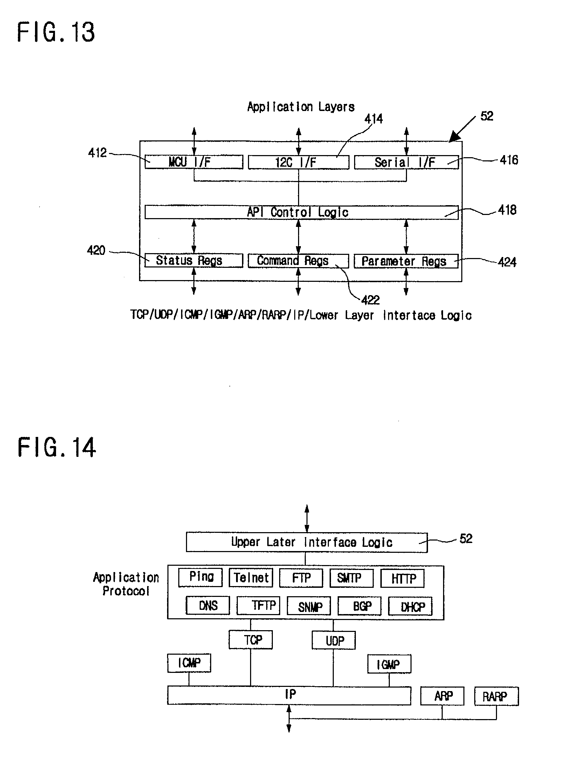

Fig. 13 is a detailed configuration of the upper layer interface logic 52 of Fig. 3. The upper layer interface logic supports various protocols, including MCU bus interface, inter-IC control (I2C) and serial bus.

Referring to Fig. 13, an MCU interface (I/F) block 412 produces an MCU bus interface signal having a data width of 8-bit, 16-bit or 32-bit and communicates data with the MCU. An I2C interface 413 and a serial interface 416 function to produce corresponding interface signals. For each of the interface blocks, one or more blocks may be used, if desired.

The upper layer protocol logic 52 provides an application programming interface (API) for supporting convenience in programming by MCU users. The API interface is processed by an API control logic 418 of Fig. 13. The API control logic 418 performs, by means of hardware, the API functions that have been previously carried out by software, and accomplishes a clock synchronization operation according to various MUC interfaces.

The upper layer interface, logic 52 includes a command register 422 for accepting various commands of the API interface and a status register 420 for providing various status information. The command register 422 provides a space for storing instructions from the application, and each of the lower protocol logic blocks performs its operations by reading the values in the command register 422. The results of the operations of the lower protocol logic blocks are recorded in the status register 420. The application determines the normal termination of the commands, or issues the next commands, based on the recorded data in the status register 420.

The hardware protocol processing logic explained above may include part or all of the upper layer application protocol, as shown in Fig. 14. In this case, the upper layer interface logic shown in Fig. 13 may be modified to support corresponding application protocols instead of interfaces for transmission control protocol (TCP), user datagram protocol (UDP), Internet control message protocol (ICMP) and Internet group management protocol (IGMP). The upper layer interface logic may be controlled externally or may be omitted, depending on the specific application.

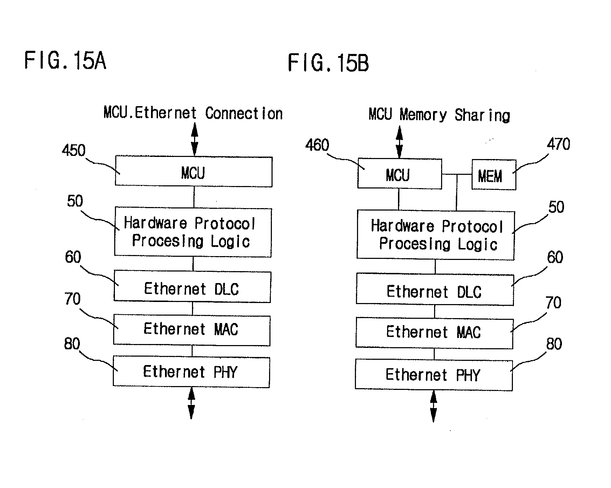

Further, the hardware protocol processing logic explained before may be modified according to the specific application. For example, as shown in Fig. 15A, the hardware protocol processing logic 50 may be connected to external general MCU 450 and lower layer Ethernet DLC 60, Ethernet MAC 80 and Ethernet PHY 80. Further, as shown in Fig. 15B, the hardware protocol processing logic 50 can share a memory 470 with an MCU 460. In Figs. 15A and 15B, the Ethernet MAC 70 and Ethernet PHY 80 can be replaced by various lower layer protocols, such as Power-line, Wireless LAN, HomePNA, HomeRF and Bluetooth, as explained with reference to Fig. 12.

The present invention can be implemented in an application-specific standard product (ASSP) or in an application-specific integrated circuit (ASIC) by using system-on-chip (SoC) technologies for any combination of blocks of Figs. 15A and 15B and internal configuration blocks of the hardware protocol processing logics shown in Fig. 3.

In the drawings and specification, there have been disclosed typical preferred embodiments of this invention and, although specific terms are employed, they are used in a generic and descriptive sense only and not for purposes of limitation, the scope of this invention being set forth in the following claims.

## Claims

1. An apparatus for Internet communication protocols, said apparatus comprising an application protocol, a transmission control protocol/Internet protocol (TCP/IP) protocol stack and a physical protocol, wherein data of the TCP/IP protocol stack are processed in parallel by means of hardware.

2. The apparatus of claim 1, wherein the TCP/IP protocol stack includes:
transmission control protocol (TCP) hardware processing logic, user datagram protocol (UDP) hardware processing logic, Internet control message protocol (ICMP) hardware processing logic, Internet group management protocol (IGMP) hardware processing logic, Internet protocol (IP) hardware processing logic, address resolution protocol (ARP) hardware processing logic and reverse address resolution protocol (RARP) hardware processing logic;
an upper layer interface logic; and
a lower layer interface logic.

3. The apparatus of claim 2, wherein each of the transmission control protocol (TCP) hardware processing logic, user datagram protocol (UDP) hardware processing logic, Internet control message protocol (ICMP) hardware processing logic, Internet group management protocol (IGMP) hardware processing logic, address resolution protocol (ARP) hardware processing logic and reverse address resolution protocol (RARP) hardware processing logic includes a respective memory controller, a respective data buffer, a respective header buffer and a respective control logic.

4. The apparatus of claim 2, wherein the Internet protocol (IP) hardware processing logic includes a memory controller, a header buffer and a control logic.

5. The apparatus of claim 4, wherein the Internet protocol (1P) hardware processing logic further comprises a data buffer for use when data are processed at low speed.

6. The apparatus of claim 4, wherein the Internet protocol (IP) hardware processing logic further comprises a data buffer for use when delay is not critical.

7. A circuit comprising transmission control protocol/Internet protocol (TCP/IP) protocol stacks integrated into one of an application-specific standard product (ASSP) and an application-specific integrated circuit (ASIC) chip, wherein said TCP/IP protocol stacks are implemented in hardware.

8. A method of transmitting protocol data through an Internet communication protocol device which includes at least one transmission control protocol/Internet protocol (TCP/IP) protocol stack, said method comprising the steps of:
receiving data from an upper layer and storing the received data into a data buffer;
calculating a checksum of said data; and
storing said checksum in a header buffer;
said step of storing the received data into the data buffer and said step of storing the checksum of said data into the header buffer being carried out at the same time, whereby the checksum calculation need not be carried out during data transmission.

9. A method for processing Internet protocol data by at least one data processing hardware unit, wherein unit processing data of an Internet protocol are processed in parallel in a unit time, and header information and the unit processing data of the Internet protocol are received and transmitted without delay.

10. The method of claim 9, wherein when the unit processing data of the Internet protocol are transmitted, a checksum value calculated in advance is used in transmitting the unit processing data of the Internet protocol, whereby reading of the unit processing data of the Internet protocol from a data buffer for calculation of the checksum is omitted.

11. The method of claim 9, wherein when the unit processing data of the Internet protocol are received, a checksum of the unit processing data of the Internet protocol is calculated without using a dedicated data buffer for the calculation of the checksum and, at the same time, the received unit processing data of the Internet protocol are stored in a the data buffer to which the received unit processing data of the Internet protocol are finally stored.

12. The method of claim 11, wherein the unit processing data of the Internet protocol stored in the data buffer are selectively left or deleted depending on the calculated checksum value at the time when a checksum calculation for final data is completed.

13. A method for processing data in parallel, comprising:
a first processing step performed during a first unit time, and comprising sub-steps of storing first unit processing data in a temporary buffer, initializing a checksum buffer to be used in a checksum calculation of the first unit processing data, and storing the first unit processing data in a first buffer;
a second processing step performed during a second unit time, and including sub-steps of summing second unit processing data and the value stored in the temporary buffer, and storing the second unit processing data in a second buffer;
a third processing step performed during a third unit time, and including sub-steps of storing third unit processing data in the temporary buffer, storing a value summed in the second unit time in the checksum buffer, and storing the third unit processing data in a third buffer; and
a fourth processing step performed during a fourth unit time, and including sub-steps of summing fourth unit processing data and the value stored in the temporary buffer, and storing the fourth unit processing data in a fourth buffer;
said first, second, third and fourth processing steps being performed repeatedly for the processing of Internet protocol data, and wherein, at each processing step, multiple operations are simultaneously carried out by a plurality of parallel processing units within a single unit time.

14. The method of claim 13, wherein the Internet protocol data comprise transmission control protocol (TCP), user datagram protocol (UDP), Internet control message protocol (ICMP), Internet group management protocol (IGMP), Internet protocol (IP), address resolution protocol (ARP) and reverse address resolution protocol (RARP) protocol header information and data.

15. A method for processing, in parallel, header information and data of a transmission control protocol (TCP), said method comprising:
a first processing step performed during a first unit time (t1), and including sub-steps of storing ACK1 in an ACK number field of a TCP header into a temporary buffer (TMP), initializing a checksum buffer (CBUF) to be used in a header checksum calculation, and storing the ACK1 into a first buffer (R1);
a second processing step performed during a second unit time (t2), and including sub-steps of summing ACK2 in the ACK number field of the TCP header and a value stored in the temporary buffer (TMP), and storing the ACK2 in a second buffer (R2);
a third processing step performed during a third unit time (t3), and including sub-steps of storing ACK3 in the ACK number field of the TCP header into the temporary buffer (TMP), storing a value summed in the second unit time (t2) into the checksum buffer (CBUF), and storing the ACK3 into a third buffer (R3);
a fourth processing step performed during a fourth unit time (t4), and including sub-steps of summing ACK4 in the ACK number field of the TCP header and the value stored in the temporary buffer (TMP), and storing the ACK4 into a fourth buffer (R4); and
a fifth processing step performed during a fifth unit time (t5), and including sub-steps of storing HLEN in an HLEN field of the TCP header in the temporary buffer (TMP), storing a value calculated in the fourth unit time (t4) in the checksum buffer (CBUF), immediately processing the HLEN without delay, and processing the ACK number field using ACK values collected during a period from the first unit time to the fourth unit time (t1∼t4);
said first, second, third, fourth and fifth processing steps being performed repeatedly for the processing of Internet protocol data, and wherein, at each processing step, multiple operations are simultaneously carried out by a plurality of parallel processing units within a single unit time.

16. A method for processing protocol data in hardware, said method comprising the steps of:
storing received protocol data in a temporary buffer, and transferring the received protocol data by storing the received protocol data in respective corresponding data buffers in a unit time while a checksum is calculated;
producing a checksum calculation value of final protocol data at a time when the final protocol data are received;
storing a checksum calculation result of an overall protocol data packet into a checksum buffer at a next unit time (tn+1) when the final protocol data are received, and comparing the stored checksum calculation result with a checksum value in a header of a corresponding protocol;
discarding data stored in the respective corresponding data buffer of the corresponding protocol when the comparison result indicates a checksum fail, and returning a memory pointer value to a previous value at a next unit time (tn+3); and
preserving the data stored in the respective corresponding data buffer of the corresponding protocol when the comparison result does not indicate the checksum fail, and proceeding to a process for the next received protocol segment.

17. The method of claim 16, wherein the received protocol data includes transmission control protocol (TCP), Internet protocol (IP) and user datagram protocol (UDP) data.

18. A method for transmitting application protocol data to an Internet protocol (IP) layer by using hardware protocol control logic, said method comprising the steps, carried out in parallel, of:
pre-storing data to be transmitted in a corresponding protocol data buffer at an application layer;
sending pre-produced protocol header information prior to data transmission; and
continuously transmitting data from the protocol data buffer to a lower layer from a next unit time following the sending of the pre-produced protocol header information.

19. The method of claim 18, wherein the application protocol data includes transmission control protocol (TCP), user datagram protocol (UDP), Internet control message protocol (ICMP) and Internet group management protocol (IGMP) data.

20. An apparatus for directly connecting and controlling a lower physical layer of an Internet protocol (IP) protocol and an IP layer by means of hardware and without intervention of software.

21. The apparatus of claim 20, comprising:
an initialization data buffer for storing data for initializing a lower layer protocol;
initialization control logic for initializing the lower layer protocol by reading initialization information from the initialization data buffer;
a multiplexer (MUX) unit for transferring the initialization information to the lower layer protocol according to control information from the initialization control logic, and transferring, after the completion of the initialization, data from a first-in-first-out (FIFO) memory to the lower layer protocol;
the FIFO memory synchronizing clocks between an upper layer protocol, including Internet protocol ([P), address resolution protocol (ARP) and reverse address resolution protocol (RARP) blocks, and the lower layer protocol; and
a protocol MUX for identifying packets of IP logic, ARP logic and RARP logic in a receiving phase, and for selecting and transmitting data of the IP logic, the ARP logic and the RARP logic.

22. The apparatus of claim 21, wherein the lower layer protocol is selected from a group consisting of Ethernet, Wireless local area network (LAN), power-line communication, Bluetooth, home phone-line networking alliance (HomePNA) and home radio frequency (HomeRF)

23. An apparatus for connecting transmission control protocol (TCP) hardware processing logic, user datagram protocol (UDP) hardware processing logic, Internet control message protocol (ICMP) hardware processing logic, Internet group management protocol (IGMP) hardware processing logic, Internet protocol (IP) hardware processing logic, address resolution protocol (ARP) hardware processing logic and reverse address resolution protocol (RARP) hardware processing logic and an upper layer, said apparatus comprising:
application programming interface (API) control logic for establishing an application programming interface, and having a clock synchronizing function with a microcontroller unit (MCU) for various interfaces,
a command register for storing commands from an application; and
a status register for providing status information.

24. A hardware application programming interface (API) controlling apparatus for connecting transmission control protocol (TCP) hardware processing logic, user datagram protocol (UDP) hardware processing logic, Internet control message protocol (ICMP) hardware processing logic, Internet group management protocol (IGMP) hardware processing logic, Internet protocol (DP) hardware processing logic, address resolution protocol (ARP) hardware processing logic and reverse address resolution protocol (RARP) hardware processing logic and an upper layer, said apparatus implementing in hardware an API and communicating with an upper layer via one of a microcontroller unit (MCU) interface, an I2C interface and a serial interface.
